# FASCICULE DE BREVET EUROPEEN

(11) **EP 3 247 489 B1**
(45) Date de publication et mention de la délivrance du brevet: **04.09.2019**
(21) Numéro de dépôt: 16701138.6
(22) Date de dépôt: 20.01.2016
(51) Int. Cl.: A23C 9/152, A23G 3/52, B01F 3/22, A23P 10/40, A23P 30/20, A23P 30/40, B01J 2/04, B01F 3/04, A23C 1/10

(54) **PROCÉDÉ DE PRODUCTION D'UN PRODUIT POREUX EN POUDRE**
VERFAHREN ZUR HERSTELLUNG EINES PULVERFÖRMIGEN PORÖSEN PRODUKTES
PROCESS FOR PRODUCING A POWDERED POROUS PRODUCT

(30) Priorité: 21.01.2015 FR 1550481
(43) Date de publication de la demande: 29.11.2017
(73) Titulaire: Clextral, 42700 Firminy (FR)
(72) Inventeur: BRISSET, Alain, 42240 Unieux (FR); COLLADO, Maxime, 43330 Pont-Salomon (FR)
(74) Mandataire: Lavoix
(86) Numéro de dépôt international: PCT/EP2016/051148
(87) Numéro de publication internationale: WO 2016/116513

(56) Documents cités:
- EP-A1- 1 133 923
- WO-A2-2008/046996
- DE-A1-102011 102 734

## Description

La présente invention concerne un procédé de production d'un produit poreux en poudre.

L'invention s'intéresse plus spécifiquement au cas de la production de produits poreux en poudre à partir d'un produit initial visqueux, les produits obtenus étant typiquement des poudres dites instantanées, que l'on mélange par exemple à de l'eau ou à d'autres liquides pour obtenir, par réhydratation des poudres, un liquide homogène.

EP-A-1 133 923 divulgue un procédé de ce type, dont les principales étapes consistent à :
- préparer une liqueur concentrée, dont la viscosité n'est pas explicitée, mais dont l'humidité doit être faible puisque la concentration en matière sèche de cette liqueur concentrée doit être supérieure à 50% en poids ;
- faire mousser cette liqueur concentrée dans un appareil de moussage, avec un très fort foisonnement pour obtenir une liqueur mousseuse très aérée et donc instable, en étant propice à s'effondrer sur elle-même du fait de sa très faible masse volumique ;
- stabiliser, dès sa sortie de l'appareil de moussage, la liqueur mousseuse pour obtenir une mousse stabilisée présentant une viscosité extrêmement élevée, qui est supérieure à 10⁵ Pa.s voire 10⁶ Pa.s et qui correspond typiquement à celle du mastic pour fenêtre, et formant ainsi une structure suffisamment rigide, autrement dit non coulante, en particulier non dispersable, cette étape de stabilisation de la liqueur mousseuse étant essentielle au procédé de production car indispensable pour mettre en oeuvre la suite de ce procédé ; et
- obtenir un produit poreux en poudre après avoir d'abord morcelé la mousse stabilisée puis avoir séché les morceaux résultant du morcelage, ce séchage étant limité du fait que l'humidité résiduelle de la mousse stabilisée est minime.

WO-A-2008/046996 divulgue un procédé et une installation de ce type, dans lesquels le produit initial visqueux est, avant d'être mélangé à du gaz dans un aérateur pour former une mousse liquide qui est ensuite divisée et séchée pour obtenir un produit poreux en poudre, soumis à l'action d'une machine de traitement thermomécanique, typiquement une machine d'extrusion. Dans cette machine, le produit initial visqueux est travaillé mécaniquement, notamment soumis à un cisaillement contrôlé, et/ou thermorégulé afin de le conditionner au mieux en vue de son admission dans l'aérateur. WO-A-2008/046996 propose même d'utiliser la machine de traitement thermomécanique pour réaliser un premier mélange entre le produit initial visqueux et un gaz, afin d'initier de la porosité dans la matière traitée, le mélange de cette dernière avec du gaz étant intensifié dans l'aérateur raccordé en continuité de la machine d'extrusion.

De son côté, WO-A-2013/185941 s'intéresse à une production plus spécifique de produits poreux en poudre, à savoir ceux contenant des probiotiques ou des microorganismes similaires. Là encore, le produit initial visqueux est, avant d'être envoyé à un aérateur pour former une mousse qui est ensuite divisée et séchée pour obtenir le produit poreux en poudre, traité mécaniquement et/ou thermiquement par une machine de traitement thermomécanique, telle qu'une machine d'extrusion ou un échangeur de chaleur à surface raclée. Comme dans WO-A-2008/046996, du gaz est mélangé à la matière produite par la machine de traitement thermomécanique, ce gaz pouvant être introduit directement dans cette machine et/ou dans l'aérateur.

On comprend que WO-A-2008/046996 et WO-A-2013/185941 enseignent tous les deux qu'un traitement mécanique et/ou thermique par une machine de traitement thermomécanique ad hoc, notamment une machine d'extrusion, est indispensable pour « préparer » la matière visqueuse à son admission dans l'aérateur de formation de mousse, notamment en abaissant la viscosité de cette matière avant son admission dans l'aérateur. Cela se comprend du fait que, par définition, un aérateur est un mélangeur mécanique qui n'est pas conçu pour agir sur des matières trop fortement visqueuses.

Cependant, l'utilisation de machines de traitement thermomécanique, notamment de machines d'extrusion, induit des contraintes. En effet, ces machines de traitement thermomécanique sont des équipements mécaniquement complexes avec des systèmes d'engrenages et de réducteurs, quelquefois munis de paliers et joints tournants, ainsi qu'avec des vis, des racleurs à axe tournant, ces équipements étant généralement thermorégulés, à vitesse variable et parfois équipés de systèmes de mise sous vide. Par ailleurs, lorsqu'on travaille avec des produits à très haute valeur ajoutée et/ou lorsqu'on veut produire à partir de très petites quantités, par exemple avec un débit de production inférieur à 40 kg/h, les machines de traitement thermomécanique précitées sont trop volumineuses et nécessitent des quantités de plusieurs kilogrammes, par exemple entre 10 et 50 kg, pour réaliser la fabrication de poudre poreuse. Plus globalement, on comprend que la mise en oeuvre de procédés utilisant de telles machines de traitement thermomécanique est coûteuse en matière première et nécessite de la place au sol, du personnel pour l'exploitation et un investissement significatif dans des appareils sophistiqués.

Pour contourner partiellement ces inconvénients, WO-A-2013/185941 envisage une alternative à la production continue de produits poreux en poudre, en recourant à un procédé discontinu : pour cela, on place le produit initial visqueux dans une enceinte hermétique qui est agitée, de la pression à l'intérieur de l'enceinte étant générée par l'injection d'un gaz. Ainsi, le gaz, qui est injecté en discontinu dans l'enceinte, met de fait cette dernière en pression et se dissout partiellement dans le produit visqueux. Cette enceinte est alors mécaniquement agitée, de façon manuelle ou à l'aide d'un système mécanique ad hoc. En pratique, on ne maitrise pas vraiment l'efficacité du mélange, ce dernier étant par la suite sorti de l'enceinte pour être directement divisé et séché. On comprend que cette alternative discontinue, proposée dans WO-A-2013/185941 convient bien pour produire de très petites quantités de produits poreux pulvérulents, mais elle reste fastidieuse à mettre en oeuvre et peut maitrisable.

Le but de la présente invention est d'améliorer les procédés de production continue de produits poreux en poudre, en les simplifiant, notamment dans le cas où la quantité de matière première est faible.

A cet effet, l'invention a pour objet un procédé de production d'un produit poreux en poudre, tel que défini à la revendication 1.

Les inventeurs ont établi que, de manière surprenante, le recours à une machine de traitement thermomécanique, telle qu'une machine d'extrusion, n'est pas indispensable pour rendre le produit initial visqueux apte à son admission dans un aérateur. Ainsi, suivant une approche opposée aux enseignements de WO-A-2008/046996 et WO-A-2013/185941, les inventeurs ont établi que l'utilisation d'une pompe classique est possible pour transférer jusqu'à l'aérateur le produit initial visqueux tel quel, c'est-à-dire notamment sans traitement thermique substantiel et sans traitement mécanique significatif, c'est-à-dire sans traitement thermique et sans traitement mécanique autres que ceux résultant exclusivement du pompage par la pompe, autrement dit de l'aspiration, de la mise en pression et du refoulement par cette pompe. En pratique, la forme de réalisation de cette pompe n'est pas limitative de l'invention. Au niveau de l'aérateur, le produit initial visqueux, monté en pression par la pompe, est admis par le refoulement de la pompe tandis que du gaz est injecté : sous l'effet de la pression de refoulement de la pompe et de la pression d'injection du gaz, le produit initial visqueux est, malgré sa forte viscosité, mélangé au gaz par l'aérateur, de façon à former une mousse liquide. En sortie de l'aérateur, la mousse liquide est, sous l'effet de la pression régnant dans l'aérateur, poussée en continu vers un dispositif de traitement continu, placé en aval, qui divise cette mousse liquide en particules puis qui sèche ces particules, ce dispositif étant, par exemple, une tour d'atomisation éventuellement suivie d'un lit fluidisé.

On comprend que la pompe précitée a pour fonction exclusive de transférer le produit initial visqueux vers l'aérateur, avec une mise en pression compatible à ce transfert puis à la division suivie du séchage, en sortie de l'aérateur, de la mousse liquide formée par cet aérateur. La pompe remplace efficacement un système mécanique plus complexe et simplifie le procédé de production, en ce sens qu'on utilise uniquement une seule injection de gaz, à savoir celle dans l'aérateur, on travaille avec des quantités faibles de matière première, par exemple entre 1 et 20 kg/h, on réduit l'investissement initial, on réduit les coûts d'exploitation et de maintenance, et on propose une installation de production plus compacte qu'avec une machine d'extrusion ou une autre machine similaire de traitement thermomécanique.

Des caractéristiques additionnelles avantageuses du procédé conforme à l'invention, prises isolément ou selon toutes les combinaisons techniquement possibles, sont spécifiées aux revendications 2 à 11.

L'invention sera mieux comprise à la lecture de la description qui va suivre, donnée uniquement à titre d'exemple et faite en se référant aux dessins sur lesquels :
- la figure 1 est une vue schématique d'une installation permettant de mettre en oeuvre un procédé conforme à l'invention ;
- la figure 2 est un organigramme d'un procédé conforme à l'invention ; et
- la figure 3 est un organigramme d'une variante du procédé, conforme à l'invention.

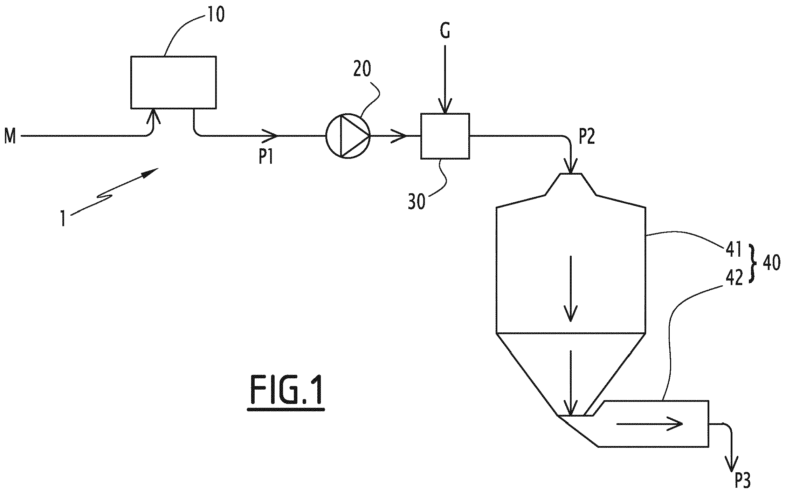

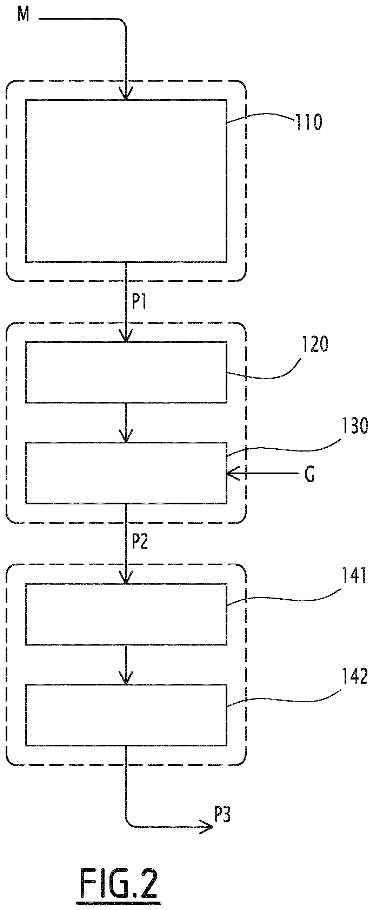

Sur la figure 1 est représentée une installation 1 de production d'un produit poreux en poudre P3. L'installation 1 est apte à mettre en oeuvre le procédé de production représenté à la figure 2.

L'installation 1 comprend un dispositif de préparation 10 qui, au cours d'une étape de préparation correspondante 110, prépare un produit initial visqueux P1 à partir d'une matière première M.

A titre d'exemples préférentiels, la matière première M est le produit initial visqueux est obtenu à partir d'une solution, suspension ou émulsion dans un solvant, notamment un milieu aqueux, contenant :
- du lait, ou
- des oeufs, ou
- des fruits, ou
- des légumes, ou
- des algues, ou
- au moins un co-produit de fractionnement du lait, d'oeufs, de fruits, de légumes et/ou d'algues, ou
- au moins un ingrédient aromatique tel que du café, du thé et des extraits aromatiques, ou
- au moins un ingrédient amylacé à base de céréales ou de tubercules, ou
- au moins un ingrédient contenant des micro-organismes entiers, ou
- au moins un ingrédient contenant des fractions de micro-organismes, ou
- au moins un ingrédient protéinique choisi parmi les protéines laitières, les protéines céréalières, les protéines de protéagineux, les protéines de légumineuses, les ovo-protéines et les protéines issues de micro-organismes, ou
- au moins un glucide de faible poids moléculaire, ou
- au moins un glucide complexe, ou
- au moins un édulcorant, naturel ou de synthèse, ou
- au moins un lipide d'origine animale ou végétale, ou
- au moins un ingrédient contenant des molécules amphiphiles, ou
- un mélange d'au moins deux éléments listés ci-dessus.

Le dispositif de préparation 10 est conçu pour, au cours de l'étape de préparation 110, obtenir, à partir de la matière première M, le produit initial visqueux P1 de manière que ce dernier présente, en sortie du dispositif de préparation, une température comprise entre 5°C et 70 °C, ainsi qu'une viscosité, à la température de mise à disposition du produit initial visqueux P1 en sortie du dispositif de préparation 10, supérieure à 100 mPa.s, voire 200 mPa.s, voire 500 mPa.s. On notera que, de manière usuelle, « mPa » correspond à « milli-Pascal », c'est-à-dire 10⁻³Pa. Autrement dit, à l'issue de l'étape de préparation 110, le produit initial visqueux P1, préparé à partir de la matière première M, est, à sa température de mise à disposition en sortie du dispositif de préparation 10, hautement visqueux.

En pratique, le dispositif de préparation 10 relève d'une technologie connue en soi, notamment choisie en fonction de la matière première M. A titre d'exemple, le dispositif de préparation 10, qui fonctionne à l'air libre ou éventuellement sous vide, comprend un système de dosage de liquide et/ou de solide, et/ou un système de mélange et/ou un système de concentration, notamment par évaporation, et/ou un système de séparation, notamment par centrifugation ou par membrane sélective, et/ou un système d'homogénéisation, et/ou un système de broyage colloïdal, et/ou un système de chauffage/refroidissement notamment de maintien en température, par exemple au moyen d'équipements à double enveloppe ou thermorégulés. Ainsi, au cours de l'étape de préparation 110, le ou les ingrédients de la matière première M sont mélangés et/ou concentrés, notamment par évaporation, et/ou chauffés/refroidis, notamment maintenus en température.

Dans tous les cas, le dispositif de préparation 10 permet avantageusement de mettre à disposition le produit initial visqueux P1 de manière continue, afin que ce produit initial visqueux P1 soit traité par le reste de l'installation 1 en vue de produire en continu le produit poreux en poudre P3.

L'installation 1 comprend en outre une pompe 20 qui, au cours d'une étape de transfert par pompage 120, transfère le produit initial visqueux P1, sortant du dispositif de préparation 10, jusqu'à un aérateur 30, décrit plus en détail par la suite. L'aspiration de la pompe 20 est donc raccordée à la sortie du dispositif de préparation 10, tandis que le refoulement de la pompe 20 est raccordé à l'entrée de l'aérateur 30.

En pratique, la pompe 20 relève d'une technologie connue en soi, à même de transférer tel quel le produit initial visqueux P1 depuis la sortie du dispositif de préparation 10 à l'entrée de l'aérateur 30, autrement dit de transférer, du dispositif de préparation 10 à l'aérateur 30, le produit initial visqueux P1 tel qu'il est mis à disposition en sortie du dispositif de préparation 10, sans modifier sa composition et sa densité, ainsi que sans modifier de manière sensible sa viscosité et donc les caractéristiques thermomécaniques influençant cette viscosité. Bien entendu, notamment en fonction de la technologie de la pompe 20 utilisée, une variation marginale de la viscosité du produit initial P1 peut intervenir entre l'aspiration et le refoulement de la pompe 20, du fait de la mise en pression du produit P1 et, éventuellement, du fait d'un très léger échauffement du produit P1, mais, au global, dans des proportions infimes, typiquement inférieures à 2%.

A titre d'exemples non limitatifs, la pompe 20 est une pompe monovis, une pompe à cavité progressive, une pompe à lobes, une pompe à deux vis, etc.

Dans tous les cas, on comprend que la pompe 20 a pour fonction exclusive de transférer le produit initial visqueux P1 du dispositif de préparation 10 à l'aérateur 30, en montant en pression le produit P1. Avantageusement, la pompe 20 développe ainsi une pression de refoulement comprise entre 3 et 20 bars, de préférence entre 5 et 10 bars, à la température et à la viscosité considérées pour le produit initial visqueux P1 transféré, ce dernier étant typiquement mis à disposition en sortie du dispositif 10 sensiblement à la pression atmosphérique.

Au cours d'une étape de mélange avec du gaz 130, l'aérateur 30 mélange le produit initial visqueux P1, refoulé par la pompe 20, avec un gaz G, injecté dans l'aérateur 30, pour obtenir une mousse liquide P2.

L'aérateur 30 relève, en lui-même, d'une technologie connue en soi : cet aérateur 30 est un mélangeur mécanique qui remue, agite énergiquement la matière qui y est admise. Au sein de l'installation 1 et conformément au procédé de la figure 2, l'action mécanique de l'aérateur 30 est mise en oeuvre alors que le gaz G est injecté à l'intérieur de l'aérateur afin d'induire la porosification du produit initial visqueux P1. De manière surprenante, alors que la haute viscosité du produit P1 dissuaderait d'introduire ce produit tel quel dans un système mécanique tel que l'aérateur 30, les inventeurs ont établi que, sous l'effet cumulé de la pression de refoulement de la pompe 20 et de la pression d'injection du gaz G, l'aérateur 30 est en mesure d'amorcer et de conduire efficacement la porosification du produit initial visqueux P1, jusqu'à obtenir la mousse liquide P2. On comprend que, au sein de l'aérateur 30, la porosification de la matière est progressive de l'entrée jusqu'à la sortie de l'aérateur 30, la mousse liquide P2 sortant de manière continue de l'aérateur, sous l'effet de la pression régnant dans cet aérateur.

La mousse liquide P2 étant destinée à être, en sortie de l'aérateur 30, divisée en particules présentant une phase liquide non négligeable comme expliqué par la suite, la variation de densité entre le produit initial visqueux P1 et la mousse liquide P2 formée en sortie de l'aérateur est avantageusement maîtrisée. Suivant une mise en oeuvre préférentielle, la masse volumique de la mousse liquide P2 sortant de l'aérateur 30 est ainsi comprise entre 25 et 80% de la masse volumique du liquide initial visqueux P1.

En pratique, l'aérateur 30 est un appareil d'aération statique ou dynamique. Dans le cas d'un appareil d'aération statique, l'aérateur 30 est, par exemple, un mélangeur à pièces hélicoïdales fixes. Dans le cas d'un appareil d'aération dynamique, l'aérateur 30 est constitué, par exemple, d'un appareil muni de pâles d'agitation ou de picots montés sur un arbre en rotation dans un stator, comprenant une enceinte généralement pourvue de pièces fixées sur la paroi interne de cette enceinte et favorisant le mélange.

Le gaz G, injecté dans l'aérateur 30, est de préférence du gaz carbonique. Ceci étant, à titre de variantes non limitatives, le gaz G peut également être de l'air, de la vapeur d'eau, de l'azote ou un de ses oxydes.

L'installation 1 comprend également un dispositif 40 de traitement continu de la mousse liquide P2, qui, au cours d'étapes de division 141 et de séchage 142 correspondantes, traite la mousse P2 de manière à la diviser et à la sécher pour obtenir le produit poreux en poudre P3 présentant un taux de matière sèche supérieur à 90%.

Le dispositif de traitement continu 40 relève, en tant que tel, d'une technologie connue en soi. A titre d'exemple non limitatif, ce dispositif inclut, en série, une tour d'atomisation 41 à air chaud, typiquement entre 100 et 250 °C, et un lit fluidisé 42 : la mousse liquide P2, admise en entrée de la tour d'atomisation 41, y est divisée par pulvérisation, les particules de la mousse ainsi divisée étant ensuite séchées dans un courant d'air chaud lors de leur passage dans une enceinte de séchage faisant partie de la tour d'atomisation. Ce séchage est, le cas échéant, complété dans le lit fluidifié 42. En variante non représentée, le lit fluidisé 42 est absent, les étapes de division 141 et de séchage 142 étant alors assurées exclusivement par le tour d'atomisation 41. Bien entendu, d'autres équipements que la tour d'atomisation 41 et/ou le lit fluidisé 42 sont envisageables pour assurer, lors des étapes de division 141 et de séchage 142, le traitement de la mousse liquide P2 afin d'obtenir le produit poreux en poudre P3. Ainsi, à titre de variante, la tour d'atomisation à air chaud 41 peut être remplacée par un système d'atomisation à froid, dont une enceinte, dans laquelle est poussée la mousse liquide P2, reçoit un gaz froid à humidité contrôlée, ce gaz froid pouvant être de l'air froid, typiquement entre 10°C et 60°C, ou un gaz détendu appliquant une température négative. Des détails et des alternatives de mise en oeuvre de ces étapes de division 141 et de séchage 142 sont d'ailleurs fournis dans WO-A-2008/046996, ainsi que dans WO-A-2013/185941, auxquels le lecteur peut se reporter le cas échéant.

Dans tous les cas, on comprend que, sous l'effet de la pression régnant dans l'aérateur 30 et résultant du cumul de la pression de refoulement de la pompe 20 et de la pression d'injection du gaz G, la mousse liquide P2 est, à la sortie de l'aérateur 30, poussée en continu en entrée du dispositif de traitement continu 40, puis est, au niveau du dispositif 40, partiellement, voire totalement divisée en particules, typiquement par pulvérisation en entrée de ce dispositif 40. Une partie du gaz G, injecté dans l'aérateur 30, s'échappe avantageusement de la mousse liquide P2 lors de sa division, en provoquant la structure caractéristique alvéolaire des grains du produit final P3, notamment du fait d'une différence de pression entre la sortie de l'aérateur 30 et l'entrée du dispositif 40, cette dernière étant typiquement à la pression atmosphérique. Dans le même temps, le reste du gaz G, qui s'est dissout dans la phase liquide des particules de mousse liquide, tend à s'évaporer lors du séchage, en créant des pores dans la matière constitutive des grains du produit final P3.

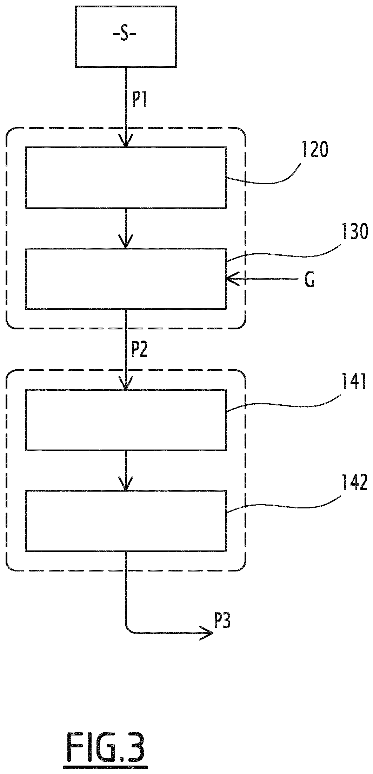

A titre de variante du procédé de production continue du produit poreux en poudre P3, décrit jusqu'ici en regard des figures 1 et 2, le procédé de la figure 3 permet de travailler, en partie, de manière discontinue. Pour ce faire, le produit initial visqueux P1 est mis à disposition sous forme d'un stockage S dont le contenu est repris, de manière discontinue, par la pompe 20, l'étape correspondante de transfert par pompage 120 et les étapes subséquentes 130, 141 et 142 en vue de produire en continu le produit poreux en poudre P3 étant identiques à celles décrites en regard de la figure 2 et portant donc les mêmes références numériques sur la figure 3. En pratique, le stockage S est, préalablement à la mise en oeuvre de cette variante du procédé de production, alimenté en produit initial visqueux P1, ce dernier étant par exemple préparé par le dispositif de préparation 10 ou un dispositif similaire, le cas échéant déporté vis-à-vis de la pompe 20, de l'aérateur 30 et du dispositif de traitement 40.

En pratique, le stockage S est mis en oeuvre au moyen, par exemple, d'un bac de stockage du produit initial visqueux P1, à même de maintenir ce dernier dans des conditions satisfaisantes, notamment de température, pour la mise à disposition du produit initial visqueux P1 aux fins de la production du produit poreux en poudre P3. Dans tous les cas, lors de la mise en oeuvre du procédé de la figure 3, l'aspiration de la pompe 20 est alimentée par le stockage S, la suite du procédé étant identique à celle décrite précédemment en regard de la figure 2.

Par ailleurs, divers aménagements et variantes à l'installation 1 et au procédé de production du produit poreux en poudre P3, décrits jusqu'ici, sont envisageables. A titre d'exemples:
- en plus de la pompe 20 prévue en amont de l'aérateur 30, une pompe peut être prévue en aval de l'aérateur 30, de manière à améliorer le transfert de la mousse liquide vers le dispositif 40, notamment en maintenant ou augmentant la pression de la mousse liquide ; en d'autres termes, la mousse liquide P2 sortant de l'aérateur 30 est alors poussée en continu de la sortie de l'aérateur à l'entrée du dispositif de traitement 40 sous l'effet combiné de la pression régnant dans l'aérateur et du transfert par cette pompe additionnelle ; et/ou
- un ou plusieurs aérateurs additionnels, statiques et/ou dynamiques, peuvent être installés en aval de l'aérateur 30, de manière à injecter plus de gaz dans la mousse liquide et /ou modifier sa viscosité ; le ou les gaz injectés dans ce ou ces aérateurs additionnels peuvent être de même nature que le gaz injecté dans l'aérateur 30 ou être un ou des gaz différents ; le cas échéant, une pompe de transfert supplémentaire peut être ajoutée, soit entre deux aérateurs successifs, soit en aval de l'aérateur aval.

### EXEMPLE : production d'un blanchisseur de café

- Ingrédients de la matière première (sèche) :
   - huile de palme 33%,
   - maltodextrine 61%, et
   - additifs alimentaires 6%.
- Etape de préparation 110: mélange des ingrédients en phase aqueuse, homogénéisation, chauffage du produit suivi d'une évapo-concentration.
- Produit initial visqueux P1, issu de l'étape de préparation 110 :
   - température de mise à disposition : 65°C
   - viscosité à la température de mise à disposition : 240 mPa.s,
   - taux de matière sèche à la température de mise à disposition : 70%, et
   - masse volumique : 1,08 kg/L.
- Etape de transfert par pompage 120 :
   - aspiration : 62 kg/h, et
   - pression de refoulement : 5 bars.
- Etape de mélange avec du gaz 130 :
   - gaz G : gaz carbonique, et
   - masse volumique : 0,73 kg/L.
- Etapes de division 141 et de séchage 142 : mises en oeuvre par la succession d'une tour d'atomisation à air chaud et d'un lit fluidisé vibrant.
- Produit poreux en poudre P3 produit :
   - débit de production : 47 kg/h, et
   - taux de matière sèche : 95%.

## Revendications

1. Procédé de production d'un produit poreux en poudre, dans lequel :
- on dispose d'un produit initial visqueux (P1) présentant à la fois une température comprise entre 5°C et 70°C et une viscosité supérieure à 100 mPa.s,
- au moyen d'une pompe (20) qui est prévue en amont d'un au moins aérateur (30) et qui refoule le produit initial visqueux (P1) à une pression comprise entre 3 et 20 bars, on transfère tel quel le produit initial visqueux jusqu'audit au moins un aérateur dans lequel ce produit initial visqueux refoulé par la pompe est mélangé avec un gaz (G), injecté dans l'aérateur, pour obtenir une mousse liquide (P2) sortant en continu de l'aérateur, et
- la mousse liquide (P2) sortant en continu dudit au moins un aérateur (30) est poussée en continu en entrée d'un dispositif de traitement (40) qui, de manière continue, divise par pulvérisation puis sèche cette mousse liquide pour obtenir un produit poreux en poudre (P3) qui présente un taux de matière sèche supérieur à 90%.

2. Procédé suivant la revendication 1, dans lequel la masse volumique de la mousse liquide (P2) sortant dudit au moins un aérateur (30) est comprise entre 25 et 80% de la masse volumique du liquide initial visqueux (P1).

3. Procédé suivant l'une quelconque des revendications précédentes, dans lequel la mousse liquide (P2) est poussée en continu de la sortie dudit au moins un aérateur (30) à l'entrée du dispositif de traitement (40) soit exclusivement sous l'effet de la pression régnant dans ledit au moins un aérateur, soit sous l'effet combiné de la pression régnant dans ledit au moins un aérateur et d'un transfert par une pompe additionnelle, prévue en aval dudit au moins un aérateur (30).

4. Procédé suivant l'une quelconque des revendications précédentes, dans lequel la pompe (20) est choisie parmi une pompe monovis, une pompe à cavité progressive, une pompe à lobes, et une pompe à deux vis.

5. Procédé suivant l'une quelconque des revendications précédentes, dans lequel la pompe (20) refoule le produit initial visqueux (P1) à une pression comprise entre 5 et 10 bars.

6. Procédé suivant l'une quelconque des revendications précédentes, dans lequel on dispose du produit initial visqueux (P1) en le préparant par mélange et/ou concentration, notamment par évaporation, et/ou par chauffage/refroidissement, notamment de maintien en température, d'un ou de plusieurs ingrédients.

7. Procédé suivant l'une quelconque des revendications précédentes, dans lequel on dispose du produit initial visqueux (P1) en le préparant et l'aspirant par la pompe (20), de manière continue.

8. Procédé suivant l'une quelconque des revendications 1 à 6, dans lequel on dispose du produit initial visqueux (P1) sous forme d'un stockage (S) qu'on utilise de manière discontinue pour alimenter l'aspiration de la pompe (20).

9. Procédé suivant l'une quelconque des revendications précédentes, dans lequel le dispositif de traitement (40) inclut une tour d'atomisation (41) dans laquelle la mousse liquide (P2) sortant en continu dudit au moins un aérateur (30) est divisée en continu par pulvérisation et un premier séchage est appliqué aux particules de mousse liquide divisée.

10. Procédé suivant la revendication 9, dans lequel le dispositif de traitement (40) inclut en outre un lit fluidisé (42), auquel sont envoyées les particules de mousse divisée qui sortent de la tour d'atomisation (41) et dans lequel un second séchage est appliqué à ces particules jusqu'à ce que ces particules présentent un taux de matière sèche supérieur à 90% et constituent ainsi le produit poreux en poudre (P3).

11. Procédé suivant l'une quelconque des revendications précédentes, dans lequel le produit initial visqueux (P1) est obtenu à partir d'une solution, suspension ou émulsion dans un solvant, notamment un milieu aqueux, contenant :
- du lait, et/ou
- des oeufs, et/ou
- des fruits, et/ou
- des légumes, et/ou
- des algues, et/ou
- au moins un co-produit de fractionnement du lait, d'oeufs, de fruits, de légumes et/ou d'algues, et/ou
- au moins un ingrédient aromatique tel que du café, du thé et des extraits aromatiques, et/ou
- au moins un ingrédient amylacé à base de céréales ou de tubercules, et/ou
- au moins un ingrédient contenant des micro-organismes entiers, et/ou
- au moins un ingrédient contenant des fractions de micro-organismes, et/ou
- au moins un ingrédient protéinique choisi parmi les protéines laitières, les protéines céréalières, les protéines de protéagineux, les protéines de légumineuses, les ovo-protéines et les protéines issues de micro-organismes, et/ou
- au moins un glucide de faible poids moléculaire, et/ou
- au moins un glucide complexe, et/ou
- au moins un édulcorant, naturel ou de synthèse, et/ou
- au moins un lipide d'origine animale ou végétale, et/ou
- au moins un ingrédient contenant des molécules amphiphiles.

## Patentansprüche

1. Verfahren zur Herstellung eines pulverförmigen porösen Stoffs, bei dem:
- ein viskoser Ausgangsstoff (P1), der sowohl eine Temperatur zwischen 5 °C und 70 °C und al auch eine Viskosität größer als 100 mPa.s aufweist, beschafft wird,
- mittels einer Pumpe (20), die stromaufwärts zu mindestens einem Belüfter (30) vorgesehen ist und die den viskosen Ausgangsstoff (P1) bei einem Druck zwischen 3 und 20 bar fördert, der viskose Ausgangsstoff unverändert bis zu dem mindestens einen Belüfter überführt wird, in dem dieser von der Pumpe geförderte viskose Ausgangsstoff mit einem in den Belüfter injiziertes Gas (G) gemischt wird, um einen flüssigen Schaum (B2) zu erhalten, der kontinuierlich den Belüfter verlässt, und
- der flüssige Schaum (P2), der kontinuierlich den mindestens einen Belüfter (30) verlässt, kontinuierlich zum Eingang einer Behandlungsvorrichtung (40) geschoben wird, die in kontinuierlicher Weise diesen flüssigen Schaum durch Zerstäubung teilt und dann trocknet, um einen pulverförmigen porösen Stoff (P3) zu erhalten, der einen Trockenmassegehalt größer als 90 % aufweist.

2. Verfahren nach Anspruch 1, bei dem die Rohdichte des flüssigen Schaums (P2), der den mindestens einen Belüfter (30) verlässt, zwischen 25 und 80 % der Rohdichte der viskosen Ausgangsflüssigkeit (P1) liegt.

3. Verfahren nach einem beliebigen der vorhergehenden Ansprüche, bei dem der flüssige Schaum (P2) kontinuierlich von dem Ausgang des mindestens einen Belüfters (30) zum Eingang der Behandlungsvorrichtung (40), sei es nur unter der Wirkung des Drucks, der in dem mindestens einem Belüfter herrscht, sei es unter der kombinierten Wirkung des in dem mindestens einen Belüfter herrschenden Drucks und einer Förderung durch eine zusätzliche Pumpe, die stromabwärts zu dem mindestens einen Belüfter (30) angeordnet ist, geschoben wird.

4. Verfahren nach einem beliebigen der vorhergehenden Ansprüche, bei dem die Pumpe (20) ausgewählt ist aus einer Einschneckenpumpe, einer Exzenterschneckenpumpe, einer Drehkolbenpumpe und einer Zweischneckenpumpe.

5. Verfahren nach einem beliebigen der vorhergehenden Ansprüche, bei dem die Pumpe (20) den viskosen Ausgangsstoff (P1) bei einem Druck zwischen 5 und 10 bar fördert.

6. Verfahren nach einem beliebigen der vorhergehenden Ansprüche, bei dem der viskose Ausgangsstoff (P1) dadurch bereitgestellt wird, dass er durch Mischung und/oder Konzentration, insbesondere durch Verdampfen, und/oder durch Aufheizen/Kühlen, insbesondere bei Temperaturhaltung, eines oder mehrerer Zusätze hergestellt wird.

7. Verfahren nach einem beliebigen der vorhergehenden Ansprüche, bei dem der viskose Ausgangsstoff (B1) zur Verfügung gestellt wird, indem er hergestellt wird und kontinuierlich von der Pumpe (20) angesaugt wird.

8. Verfahren nach einem beliebigen der Ansprüche 1 bis 6, bei dem der viskose Ausgangsstoff (P 1) in Form einer Lagerhaltung (S) zur Verfügung gestellt wird, die in diskontinuierlicher Weise benutzt wird, um das Ansaugen der Pumpe (20) zu speisen.

9. Verfahren nach einem beliebigen der vorhergehenden Ansprüche, bei dem die Behandlungsvorrichtung (40) einen Sprühturm (41) einschließt, in dem der flüssige Schaum (P2), der kontinuierlich den mindestens einen Belüfter (30) verlässt, kontinuierlich durch Zerstäubung geteilt wird und eine erste Trocknung auf die Partikel des geteilten flüssigen Schaum aufgebracht wird.

10. Verfahren nach Anspruch 9, bei dem die Behandlungsvorrichtung (40) außerdem ein Fluidbett (42) einschließt, dem die den Sprühturm (41) verlassenden Partikel des geteilten Schaums zugeführt werden und in dem diese Partikel einer zweiten Trocknung unterworfen werden, bis diese Partikel einen Trockenmassegehalt größer als 90 % aufweisen und so den pulverförmigen porösen Stoff (P 3) bilden.

11. Verfahren nach einem beliebigen der vorhergehenden Ansprüche, bei dem der viskose Ausgangsstoff (P1) aus einer Lösung, einer Suspension oder Emulsion in einem Lösungsmittel, insbesondere einem wässrigen Medium, erhalten wird, enthaltend:
- Milch und/oder
- Eier und/oder
- Früchte und/oder
- Gemüse und/oder
- Algen und/oder
- mindestens ein Koprodukt der Fraktionierung von Milch, Eiern, Früchten, Gemüsen und/oder Algen und/oder
- mindestens eine aromatische Zutat, wie Kaffee, Tee und aromatische Extrakte, und/oder
- mindestens eine Stärkezutat auf Basis von Getreide oder Wurzelknollen und/oder
- mindestens eine Zutat, die vollständige Mikroorganismen enthält, und/oder
- mindestens eine Zutat, die Fraktionen von Mikroorganismen enthält, und/oder
- mindestens eine Proteinzutat, ausgewählt aus Milchproteinen, Getreideproteinen, Proteinen von Eiweißpflanzen, Proteinen von Hülsenfrüchten, Ovoproteine und aus Mikroorganismen stammenden Proteinen, und/oder
- mindestens ein Kohlehydrat mit geringem Molekulargewicht, und/oder
- mindestens ein komplexes Kohlehydrat und/oder
- mindestens einen natürlichen oder synthetischen Süßstoff und/oder
- mindestens ein Lipid tierischen oder pflanzlichen Ursprungs und/oder
- mindestens eine Zutat, die amphiphile Moleküle enthält.

## Claims

1. A method for producing a powdery porous product, wherein:
- a viscous initial product (P1) having both a temperature comprised between 5°C and 70°C and a viscosity greater than 100 mPa.s is provided,
- by means of a pump (20) which is provided upstream from at least one aerator (30) and which discharges the viscous initial product (P1) at a pressure comprised between 3 and 20 bars, the viscous initial product is transferred as such as far as said at least one aerator in which this viscous initial product discharged by the pump is mixed with a gas (G), injected into the aerator, for obtaining a liquid foam (P2) continuously leaving the aerator, and
- the liquid foam (P2) continuously leaving said at least one aerator (30) is continuously pushed into an inlet of a treatment device (40) which, continuously divides by spraying and then dries this liquid foam in order to obtain a powdery porous product (P3) which has a dry material level greater than 90%.

2. The method according to claim 1, wherein the specific gravity of the liquid foam (P2) leaving said at least one aerator (30) is comprised between 25 and 80% of the specific gravity of the viscous initial liquid (P1).

3. The method according to any of the preceding claims, wherein the liquid foam (P2) is continuously pushed from the outlet of said at least one aerator (30) to the inlet of the treatment device (40) either exclusively under the effect of the pressure prevailing in said at least one aerator, or under the combined effect of the pressure prevailing in said at least one aerator and of a transfer by an additional pump provided downstream from said at least one aerator (30).

4. The method according to any of the preceding claims, wherein the pump (20) is selected from among a single-screw pump, a pump with gradual cavity, a pump with lobes, and a pump with twin screws.

5. The method according to any one of the preceding claims, wherein the pump (20) discharges the viscous initial product (P1) at a pressure comprised between 5 and 10 bars.

6. The method according to any of the preceding claims, wherein the viscous initial product (P1) is prepared by mixing and/or by concentrating, notably by evaporation, and/or by heating/cooling, notably for maintaining temperature, one or several ingredients.

7. The method according to any of the preceding claims, wherein the viscous initial product (P1) is prepared and sucked up by the pump (20) in a continuous way.

8. The method according to any of claims 1 to 6, wherein the viscous initial product (P1) is provided as a storage (S) which is discontinuously used for supplying a suction of the pump (20).

9. The method according to any of the preceding claims, wherein the treatment device (40) includes an atomization tower (41) in which the liquid foam (P2) leaving continuously said at least one aerator (30) is continuously divided into liquid foam particles by spraying and a first drying is applied to the liquid foam particles.

10. The method according to claim 9, wherein the treatment device (40) further includes a fluidized bed (42), to which are sent the liquid foam particles leaving the atomization tower (41), and wherein a second drying is applied to said particles until said particles have a dry material level greater than 90% and thereby form the powdery porous product (P3).

11. The method according to any of the preceding claims, wherein the viscous initial product (P1) is obtained from a solution, suspension or emulsion in a solvent, notably an aqueous medium, containing:
- milk, and/or
- eggs, and/or
- fruits, and/or
- vegetables, and/or
- algae, and/or
- at least one co-product of fractionation of milk, eggs, fruits, vegetables and/or algae, and/or
- at least one aromatic ingredient such as coffee, tea and aromatic extracts, and/or
- at least one amylaceous ingredient based on cereals or tubers, and/or
- at least one ingredient containing entire micro-organisms, and/or
- at least one ingredient containing fractions of micro-organisms, and/or
- at least one protein ingredient selected from among milk proteins, cereal proteins, protein crop proteins, legumes proteins, ovo-proteins and proteins stemming from micro-organisms, and/or
- at least one carbohydrate of low molecular weight, and/or
- at least one complex carbohydrate, and/or
- at least one sweetener, either natural or synthetic, and/or
- at least one lipid of animal or vegetable origin, and/or
- at least one ingredient containing amphiphilic molecules.
